**Europäisches Patentamt**

**European Patent Office**

**Office européen des brevets**

(19)

(11) Veröffentlichungsnummer : **0 195 787**
**B1**

(12) **EUROPÄISCHE PATENTSCHRIFT**

(45) Veröffentlichungstag der Patentschrift :
17.05.89

(51) Int. Cl.⁴ : **G 11 B 33/04, G 11 B 23/02,**
**A 47 F   3/00**

(21) Anmeldenummer : 85904577.5

(22) Anmeldetag : 18.09.85

(86) Internationale Anmeldenummer :
PCT/AT 85/00031

(87) Internationale Veröffentlichungsnummer :
WO/8601929 (27.03.86 Gazette 86/07)

(54) ANORDNUNG ZUR SICHERUNG EINER AUFZEICHNUNGSPLATTE, INSBESONDERE CD-PLATTE, GEGEN EINE UNBEFUGTE ENTNAHME.

(30) Priorität : 24.09.84 AT 3029/84

(43) Veröffentlichungstag der Anmeldung :
01.10.86 Patentblatt 86/40

(45) Bekanntmachung des Hinweises auf die Patenterteilung : 17.05.89 Patentblatt 89/20

(84) Benannte Vertragsstaaten :
BE CH DE FR GB IT LI LU NL SE

(56) Entgegenhaltungen :
WO—A—84 /024 22
DE—A— 2 539 035
DE—A— 2 918 783
US—A— 3 582 169
US—A— 3 858 280
US—A— 4 075 618
US—A— 4 254 879

(73) Patentinhaber : **Lift Verkaufsgeräte-Gesellschaft m.b.H.**
**Franzensgasse 25**
**A-1050 Wien (AT)**

(72) Erfinder : SCHUBERT, Otto
Franzensgasse 25
A-1050 Wien (AT)

(74) Vertreter : **Weinzinger, Arnulf, Dipl.-Ing. et al**
**Patentanwälte Dipl.-Ing. Helmut Sonn Dr. Heinrich Pawloy Dipl.-Ing. Arnulf Weinzinger Riemergasse 14**
**A-1010 Wien (AT)**

**Beschreibung**

Die Erfindung betrifft eine Anordnung zur Sicherung einer Aufzeichnungsplatte, insbesondere CD-Platte, gegen eine unbefugte Entnahme, wobei die Aufzeichnungsplatte in einer Kassette enthalten ist, die eine Halterung für die Aufzeichnungsplatte enthält, die mehrere abgewinkelte, federnde, durch eine mittige Öffnung in der Aufzeichnungsplatte ragende und dabei am Öffnungsrand unter Druck anliegende Haltezungen aufweist, deren Enden in eine zur Plattenebene parallele Ebene abgewinkelt und radial einwärts gerichtet sind.

Es ist bereits bekannt, bestimmte Verkaufsartikel in Geschäftslokalen dadurch gegen eine unbefugte Entnahme zu sichern, daß im Bereich des Ausgangs des Geschäftslokals ein Detektor angebracht wird, der z. B. mit einem elektronischen Schaltkreis oder mit einem Magnetstreifen zusammenwirkt (vgl. US-PS 4 075 618), der in Form von Plättchen, Etiketten od. dgl. Anhängern an den Verkaufsartikeln angebracht wird. Derartige Sicherungsanordnungen sind beispielsweise in Zusammenhang mit der elektronischen Sicherung von Kleidungsstücken gegen Diebstahl bekannt geworden, wobei der Anhänger z. B. mittels eines klammerartigen Halters oder mit Hilfe eines Dorns am Kleidungsstück angebracht wird und dieser Halter nur mit Hilfe eines dem Verkaufspersonal zur Verfügung stehenden Spezialwerkzeuges vom Kleidungsstück abgenommen werden kann (vgl. z. B. DE-OS 2 539 035 und DE-OS 2 321 584). Wenn daher ein Kleidungsstück aus dem Geschäftslokal getragen wird, ohne daß zuvor dieser Halter mit dem Anhänger entfernt worden ist, spricht der Detektor an, und er gibt ein akustisches und/oder optisches Alarmsignal ab.

Anderseits stellt die Sicherung von z. B. optisch auslesbaren Aufzeichnungsplatten, insbesondere von den relativ teuren und dabei kleinen (daher leicht einsteckbaren) sogenannten Compact-Disc-Schallplatten, üblicherweise kurz CD-Platten genannt, ein großes Problem dar, wobei bereits verschiedene Vorschläge zur entnahmesicheren Aufbewahrung und Präsentation derartiger Aufzeichnungsplatten gemacht wurden. Insbesondere ist es heute üblich, CD-Platten in versperrbaren Verkaufs- oder Präsentationsständern unterzubringen, oder aber leere CD-Kassetten zur Schau zu stellen, wobei die eigentlichen CD-Platten nur dem Verkaufspersonal zugänglich sind, beispielsweise in Schubladen im Bereich der Kassa untergebracht sind. Diese Lösungen bringen alle einen relativ hohen organisatorischen und einrichtungsmäßigen Aufwand mit sich, wobei sie überdies doch zumindest zum Teil außerordentlich unbefriedigend sind, da es beispielsweise bei den in den Ständern eingesperrten CD-Platten nicht möglich ist, eine Kassette zu öffnen und das darin enthaltene Informationsblatt zu lesen.

Der letztgenannte Nachteil spricht auch dagegen, die oben genannten Anhänger mit Haltern an den Kassetten der CD-Platten u. dgl. anzubringen, ähnlich wie dies bei der elektronischen Sicherung von Kleidungsstücken, wie erwähnt, bewerkstelligt wird, da dann die Kassetten nicht mehr geöffnet werden könnten. Wird anderseits der Sicherungs-Anhänger ähnlich wie in der US-PS 4 075 618 beschrieben an der Kassette angebracht, so kann diese weiterhin geöffnet werden, so daß es wiederum möglich ist, die CD-Platte aus der Kassette zu nehmen und die Kassette leer zurückzustellen, wobei beim Verlassen des Geschäftslokals keine unbefugte Entnahme durch den Detektor angezeigt würde.

Zu erwähnen ist noch, daß es beispielsweise aus der WO-A-84/02422 bekannt ist, an Bandkassetten oder plattenförmigen Datenträgern eine Art Sicherheitsplombe anzubringen, die zum Gebrauch der Kassetten oder Platten, etwa zum Öffnen von Plattenhüllen, zerstört werden muß, woraus später sofort ersichtlich ist, daß diese Kassetten bzw. Platten bereits früher — möglicherweise unbefugt — benutzt worden sind. Eine entnahme-, d. h. diebstahlsichere Aufbewahrung der Kassetten oder Platten wird durch diese Sicherheitsplomben jedoch nicht ermöglicht.

Es ist nun Aufgabe der Erfindung, eine Sicherungsanordnung der eingangs angegebenen Art zu schaffen, mit der auch derartige Aufzeichnungsplatten, wie insbesondere CD-Platten, verläßlich gegen eine unbefugte Entnahme gesichert werden können, wobei nichtsdestoweniger ein Öffnen der die Aufzeichnungsplatten enthaltenden Kassetten ungehindert möglich ist; dabei soll auch der konstruktive Aufwand für die Sicherungsanordnung möglichst gering sein.

Die erfindungsgemäße Sicherungsanordnung der eingangs angegebenen Art ist dadurch gekennzeichnet, daß über der Aufzeichnungsplatte auf die Haltezungen eine Deckplatte aufgesetzt bzw. aufsetzbar ist, die einen mit einem Detektor zusammenarbeitenden Signalkreis, wie einen elektronischen Sicherungs-Schaltkreis, einen Magnetcode oder einen Magnetstreifen, trägt oder, falls der Signalkreis an einem Etikett oder dergl. angebracht ist, zumindest teilweise abdeckt, und daß die Deckplatte an der Halterung durch ein mit zumindest einer der Haltezungen in Eingriff stehendes bzw. bringbares, lösbares Sicherungsglied verriegelt bzw. verriegelbar ist.

Bei der erfindungsgemäßen Anordnung überdeckt und sichert somit die entweder selbst den Sicherungs-Signalkreis tragende oder aber einen blattförmigen Signalkreis abdeckende Deckplatte die Aufzeichnungsplatte an der Halterung der Kassette, und die Deckplatte ihrerseits wird durch das aus der Sicherungsstellung lösbare Sicherungsglied gesichert. Dieses Sicherungsglied ist dabei derart ausgelegt, daß es nicht ohne weiteres von den Haltezungen gelöst werden kann, vielmehr ist es hier zweckmäßig, ein Lösen in an sich bekannter Weise nur mit Hilfe eines Werkzeuges zu ermöglichen, das dem Verkaufspersonal allein zur Verfügung steht. Damit wird erreicht, daß die Deckplatte erst beim Kauf, beispielsweise vom Verkaufspersonal an der Kassa, von der Halterung abgenommen werden kann, ein unbefugtes Abnehmen hingegen — zumindest in kurzer Zeit — praktisch nicht möglich ist. Andererseits wird bei dieser Sicherungsanordnung erreicht, daß die zum Verkauf ausgestellte Kassette ungehindert geöffnet werden kann, etwa um das innenliegende Informationsblatt studieren zu können, und es nützt einem etwaigen Dieb auch nichts, die Halterung samt Platte aus der Kassette zu nehmen, da Halterung, Aufzeichnungsplatte und Deckplatte eine für ihn untrennbare Einheit bilden, so daß beim Verlassen des Geschäftslokals sofort der Detektor ansprechen würde. Die Sicherungsanordnung ist schließlich außerordentlich einfach aufgebaut, wobei abgesehen von der den Sicherungs-Signalkreis tragenden bzw. abdeckenden Deckplatte nur ein Sicherungsglied erforderlich ist, das einfach ausgebildet sein kann. Dabei kann das Sicherungsglied getrennt von der Deckplatte oder aber auch mit dieser fest verbunden sein, wie etwa im Fall eines kleinen Schlosses, ähnlich den z. B. bei Sparbüchsen verwendeten Schlössern.

Um dieses Sicherungsglied in der Sicherungsposition anbringen bzw. wieder lösen zu können, kann es insbesondere elastisch verformbar ausgebildet und/oder bewegbar angeordnet sein.

Für eine einfache Ausbildung der Deckplatte ist es weiters günstig, wenn die Deckplatte im Bereich der Haltezungen durchbrochen ist und die Haltezungen in der aufgesetzten Sicherungsstellung der Deckplatte durch die Durchbrechung(en) ragen.

Bei CD-Platten sind üblicherweise in den Kassetten Halterungen mit acht gleichmäßig längs eines Kreises verteilten Haltezungen vorgesehen. Es ist nun bei der erfindungsgemäßen Sicherungsanordnung z. B. möglich, in der Deckplatte beispielsweise zwei annähernd halbkreisförmige Öffnungen vorzusehen, die jeweils vier derartigen Haltezungen entsprechen, d. h. es ragen jeweils vier Haltezungen durch eine derartige halbkreisförmige Öffnung, wobei weiters die zwei Öffnungen durch zwei einander diametral gegenüberliegende Stege voneinander getrennt sind. Auch wäre es denkbar, in der Deckplatte anders bemessene Öffnungen vorzusehen, welche dann beispielsweise jeweils zwei oder drei Haltezungen entsprechen, und im Extremfall ist es auch denkbar, eine Öffnung vorzusehen, die einer fast geschlossenen Kreislinie entspricht, wobei ein einzelner Steg oder Vorsprung zwischen zwei einander benachbarten Haltezungen verbleibt; über diesem Steg würde dann das Sicherungsglied zu liegen kommen, wobei dieses Sicherungsglied andererseits unterhalb der zur Plattenebene parallelen Enden der Haltezungen eingreifen würde. Vor allem aus Festigkeitsgründen ist es jedoch von Vorteil, wenn jeder Haltezunge eine gesonderte Öffnung in der Deckplatte zugeordnet ist.

Um entweder einen besseren Zugang zum Sicherungsglied zu ermöglichen oder aber mehr Platz für das Sicherungsglied zu schaffen, ist es weiters auch günstig, wenn die Deckplatte eine einzige Durchbrechung aufweist, die sternförmig, mit radialen Fortsätzen, ausgebildet ist, wobei die Haltezungen durch diese radialen Fortsätze der Durchbrechung ragen.

Eine im Hinblick auf eine besonders einfache Ausbildung vorteilhafte Ausführungsform der erfindungsgemäßen Sicherungsanordnung ist dadurch gekennzeichnet, daß die Deckplatte zumindest einen sich zwischen zwei benachbarten Haltezungen erstreckenden Steg aufweist, und daß als Sicherungsglied ein Seegerring-artiger Federring vorgesehen ist, der in seiner expandierten Sicherungsstellung zwischen der Deckplatte und den zur Plattenebene parallelen Enden der Haltezungen vorgesehen ist und in der entgegen seiner Federkraft zusammengezogenen Freigabestellung einen Durchmesser aufweist, der kleiner als der Abstand zwischen einander gegenüberliegenden Haltezungen ist. Bei dieser Ausbildung ist somit als Sicherungsglied bloß ein einfacher, aufgetrennter Federring vorgesehen, wie er an sich für viele andere Anwendungen herkömmlich ist, wobei dieser Federring an den den Schlitz begrenzenden Enden beispielsweise verbreitert und mit Vertiefungen bzw. Löchern versehen sein kann, mit denen ein zangenförmiges Werkzeug zusammenarbeitet, wenn der Federring zum Einsetzen oder zur Abnahme zusammengezogen werden soll.

Auch ist es, um mehr Platz für den Federring zu schaffen und dadurch einen stärkeren Federring einsetzen zu können, von besonderem Vorteil, wenn die Deckplatte in ihrem innerhalb der Haltezungen gelegenen Bereich nach unten gekröpft ist, wobei der oder die Stege zwischen den Haltezungen einwärts nach unten geneigt verlaufen.

Eine andere vorteilhafte Ausführungsform der erfindungsgemäßen Sicherungsanordnung, bei der vor allem eine außerordentlich einfache Anbringung des Sicherungsgliedes möglich ist, ist dadurch gekennzeichnet, daß die Deckplatte eine entsprechend der Anordnung der Haltezungen geformte Durchbrechung mit zumindest einem von deren Rand einwärts zwischen zwei der Haltezungen vorstehenden Vorsprung aufweist, und daß das Sicherungsglied durch ein innerhalb der Halterung angeordnetes Rastglied gebildet ist, das in der Sicherungsstellung oberhalb des Vorsprunges und unterhalb der zur Plattenebene parallelen Enden der dem Vorsprung benachbarten Haltezungen eingreift. Bei dieser Ausbildung wird zum Sichern der Aufzeichnungsplatte bzw. der Deckplatte einfach das Rastglied von oben in die Öffnung zwischen den Haltezungen der Halterung eingesetzt, wobei es hinter die parallelen, oberen Enden der Haltezungen einschnappt und dabei oberhalb des stegartigen Vorsprunges bzw. der stegartigen Vorsprünge der Deckplatte zu liegen kommt. Dabei ist es weiters von Vorteil, wenn das elastisch verformbar ausgebildete Rastglied eine mittige Einschnürung aufweist und von dieser Einschnürung sowohl nach oben, bis unter die Enden der Haltezungen, als auch nach unten divergierend verläuft, wobei die Einschnürung bei der elastischen Verformung des Rastgliedes ein Gelenk bildet, um das der obere Teil des Rastgliedes bei dessen Ausweitung im Bereich der Einschnürung radial einwärts schwenkbar ist. Das Rastglied kann somit beispielsweise in der Art eines Doppelkonus ausgebildet sein, wobei eine geschlossene rotationssymmetrische Form vorliegen kann, es kann aber auch in Axialrichtung zumindest im oberen Bereich längs einer oder mehrerer Axialebenen in schalenartige Rastzungen geteilt sein, wobei diese Rastzungen unter elastischer Verformung gegeneinander bewegbar sind. In all diesen Fällen wird eine einfache Form des Rastgliedes erzielt, wobei andererseits das Rastglied außerordentlich einfach einsetzbar ist.

Um das Rastglied auch auf einfache Weise wieder abnehmen zu können, ist es hier ferner von Vorteil, wenn innerhalb des unteren divergierenden Teiles des Rastgliedes ein sich entsprechend dem divergierenden Verlauf dieses Rastglied-Teiles nach unten erweiternder, keilartiger Körper, vorzugsweise ein magnetischer Eisenkörper angeordnet ist. Bei Anheben des Körpers, z. B. mit Hilfe eines Hakens oder eines über der Halterung gehaltenen, ausreichend starken Magneten, wird das Rastglied im Bereich der Einschnürung gedehnt oder ausgeweitet, so daß wie vorstehend erwähnt der obere Teil des Rastgliedes, insbesondere die genannten schalenförmigen Rastzungen, radial einwärts verschwenkt wird bzw. werden.

Gemäß einer anderen Ausführungsform, bei der das Rastglied in ähnlicher Weise beim Einsetzen einfach in die Sperrstellung einschnappt, weist das Rastglied zumindest zwei an ihren unteren Enden schwenkbar miteinander verbundene, mit ihren federnd auseinandergedrückten oberen Enden oberhalb von zumindest zwei einander gegenüberliegenden Vorsprüngen und unterhalb der Enden der diesen Vorsprüngen benachbarten Haltezungen eingreifende Spreizarme auf.

Dabei ist es im Hinblick auf eine einfache Ausbildung weiters günstig, wenn die Schwenkverbindung der Spreizarme durch einen elastisch verformbaren Bereich des einstückig ausgebildeten Rastgliedes gebildet ist.

Auch hier ist es für ein einfaches Abnehmen des Rastgliedes wiederum von Vorteil, wenn ein keilartiger Körper zum Zurückbewegen der Spreizarme vorgesehen wird, und es ist demgemäß günstig, wenn die unteren Abschnitte der Spreizarme von einem ringförmigen Körper, insbesondere einem magnetischen Eisenkörper, umschlossen sind, bei dessen Anheben die Spreizarme aufeinander zu schwenkbar sind.

Sofern die die Aufzeichnungsplatte tragende Halterung aus der Plattenkassette herausgenommen werden kann, wie dies bei CD-Platten an sich üblich ist, ist es bei den beiden zuletzt gennanten Ausführungsformen auch zweckmäßig, das jeweilige Rastglied an der Unterseite, d. h. an der dem Kassettenboden zugewandten Seite der Halterung, gegen einen Zugriff zu schützen. Dies kann auf einfache Weise dadurch geschehen, daß das Rastglied sowie gegebenenfalls der keilartige Körper innerhalb eines becherförmigen Behälters angeordnet ist bzw. sind, der mit einer oberen Öffnung den Enden der Haltezungen zugewandt ist und mit einem oder mehreren flanschartigen Randvorsprüngen zwischen der Aufzeichnungsplatte und der Deckplatte eingreift.

Eine andere vorteilhafte Ausführungsform der erfindungsgemäßen Sicherungsanordnung, die sich u. a. durch Kompaktheit, besonders einfache Anbringung und hohe Sicherheit auszeichnet, ist dadurch gekennzeichnet, daß die Deckplatte eine geschlossene Deckfläche bildet und an ihrer Unterseite mit einem zwischen die Haltezungen abstehenden zylindrischen oder prismatischen, insbesondere becherförmigen Vorsprung ausgebidet ist, in dessen Wand benachbart zumindest zwei einander gegenüberliegenden Enden von Haltezungen Öffnungen vorgesehen sind, durch die in der Sicherungsstellung die oberen federnd auseinandergedrückten Enden von zwei an ihren unteren Enden schwenkbar miteinander verbundenen, als Sicherungsglied vorgesehenen Spreizarmen ragen, wobei diese oberen Enden unter die Enden der Haltezungen greifen.

Dabei ist es zur Aufhebung der Sicherung ähnlich wie bei den zuvor erwähnten Ausführungsformen wiederum vorteilhaft, wenn die Spreizarme mittels eines sie umschließenden ringförmigen, magnetischen Eisenkörpers bei dessen Anheben aufeinander zu schwenkbar sind.

Andererseits kann hier auch eine Aufhebung der Sicherung, d. h. Abnahme der Sicherungsanordnung, in vorteilhafter Weise mit einer Art Schlüssel vorgesehen werden, und es ist demgemäß günstig, wenn in der Deckplatte eine schlüssellochartige Öffnung vertikal oberhalb der Gelenkverbindung der beiden Spreizarme vorgesehen ist, wobei die Spreizarme durch Abwärtsdrücken des Bereiches ihrer Gelenkverbindung aufeinander zu schwenkbar sind.

Die Erfindung wird nun nachstehend anhand von in der Zeichnung dargestellten besonders bevorzugten Ausführungsbeispielen noch weiter erläutert.

Es zeigen :

Fig. 1 eine schematische Draufsicht auf einen Teil einer CD-Platte an einer Halterung einer nicht näher dargestellten CD-Kassette, mit einer Anordnung zur Sicherung gegen eine unbefugte Entnahme, in gegenüber der natürlichen Größe vergrößerter Darstellung ;

Fig. 2 in noch weiter vergrößerter Darstellung einen Querschnitt durch dieses Anordnung gemäß der Linie II-II in Fig. 1 ;

Fig. 3 in einer Querschnittsdarstellung ähnlich Fig. 2 eine etwas abgewandelte Sicherungsanordnung, bei der die Deckplatte innerhalb der Halterung in der Art einer Kröpfung nach unten versetzt ist, um mehr Platz für den als Sicherungsglied vorgesehenen Federring vorzusehen ;

Fig. 4 eine Draufsicht auf einen bei den Sicherungsanordnungen gemäß Fig. 1 bis 3 vorgesehenen aufgetrennten Federring, wobei dessen expandierte bzw. entspannte Lage mit strichlierten Linien und die entgegen der Federkraft herbeigeführte zusammengezogene Stellung mit ausgezogenen Linien veranschaulicht ist ;

Fig. 5 eine Draufsicht ähnlich Fig. 1 auf eine weitere Anordnung, wobei die CD-Platte nicht näher ersichtlich ist und das innerhalb der Halterung vorgesehene Sicherungsglied zwecks größerer Klarheit weggelassen wurde ;

Fig. 6 eine Querschnittsdarstellung dieser Sicherungsanordnung, gemäß der Linie VI-VI in Fig. 5, wobei nun auch das Sicherungsglied veranschaulicht ist ;

Fig. 7 das bei der Anordnung gemäß Fig. 5 und 6 vorgesehene Sicherungsglied in schematischer axonometrischer Darstellung ;

Fig. 8 in einer Querschnittsdarstellung ähnlich Fig. 2 oder 3 eine weitere Sicherungsanordnung ;

Fig. 9 eine Draufsicht auf einen bei den Sicherungsanordnungen gemäß Fig. 5 und 6 bzw. gemäß Fig. 8 vorgesehenen schalen- oder becherförmigen Behälter mit flanschartig vorspringenden, lappenförmigen Randvorsprüngen, die in der Sicherungsstellung zwischen der CD-Platte und der darüber befindlichen Deckplatte eingreifen ; und

Fig. 10 in einer Querschnittsdarstellung ähnlich Fig. 8 noch eine andere Sicherungsanordnung.

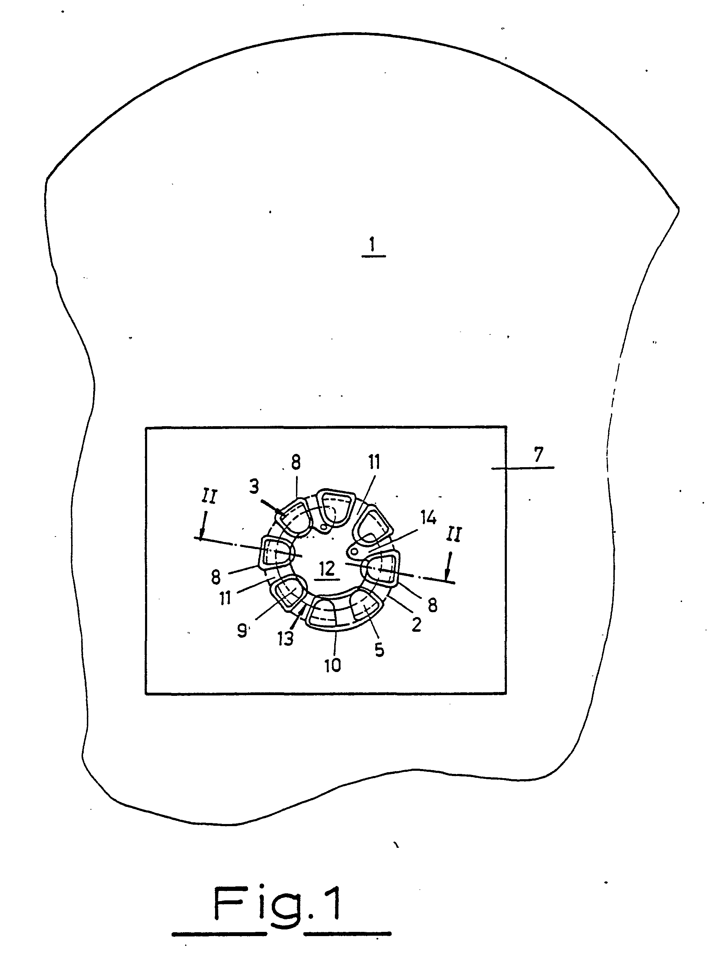

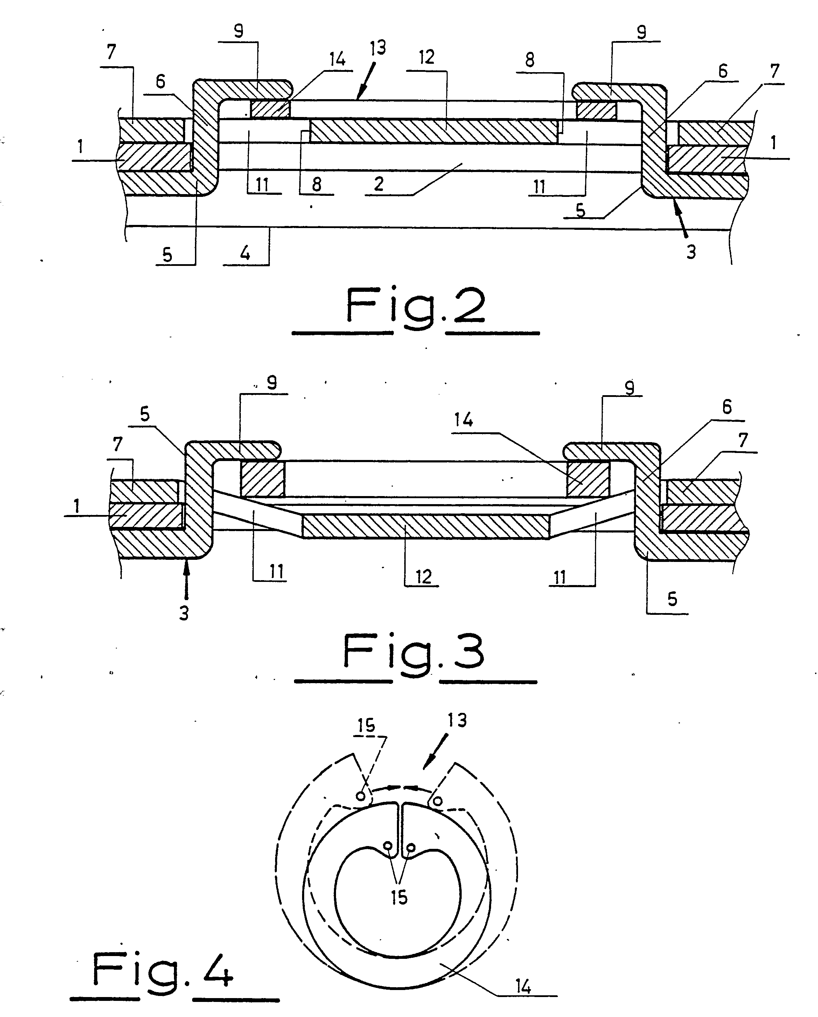

In Fig. 1 und 2 ist ein Teil einer Compact-Disc (CD)-Platte 1 gezeigt, die mit einer mittigen, kreisförmigen Öffnung 2 in herkömmlicher Weise auf eine Halterung 3 einer CD-Kassette aufgesetzt ist, von der in Fig. 2 der Boden schematisch bei 4 angedeudet ist. Die Halterung 3 weist dabei in üblicher Weise mehrere, beispielsweise acht, zweifach abgewinkelte Haltezungen 5 auf, die von einem nicht näher dargestellten Plattenteil radial einwärts abstehen und mit ihren ungefähr vertikalen, zur Erzielung einer Klemmwirkung nach oben leicht auswärts geneigten Stegteilen 6 unter Druck am Rand der Öffnung 2 der CD-Platte 1 anliegen. Auf diese Weise wird die CD-Platte 1 an der Halterung 3 klemmend festgehalten.

Erfindungsgemäß ist nun über der Aufzeichnungsplatte, d. h. CD-Platte 1, eine sie teilweise überdeckende Deckplatte 7 auf die Halterung 3 aufgesetzt, wobei diese Deckplatte 7 in an sich herkömmlicher Weise einen nicht näher veranschaulichten Sicherungs-Signalkreis tragen kann, der mit einem entfernt angebrachten Detektor zusammenarbeiten kann, um im Fall einer unbefugten Entnahme ein Alarmsignal abzugeben. Der Signalkreis kann dabei an der Deckplatte 7 an deren der CD-Platte 1 zugewandten Unterseite in Form von Leiterbahnen, die einen Schwingkreis bilden, oder in Form eines Magnetcodes in einem Magnetstreifen etc. vorgesehen sein.

Grundsätzlich wäre es hier selbstverständlich aber auch möglich, einen derartigen Signalkreis an einem Etikett, Anhänger od. dgl., wie an sich bekannt, zu verwenden, und dieses Etikett, diesen Anhänger od. dgl. zwischen der CD-Platte 1 und der Deckplatte 7 anzubringen, wobei die Deckplatte 7 dann diesen blattförmigen Signalkreis ganz oder teilweise überdecken würde.

Dies gilt für diese und alle folgenden Ausführungsformen.

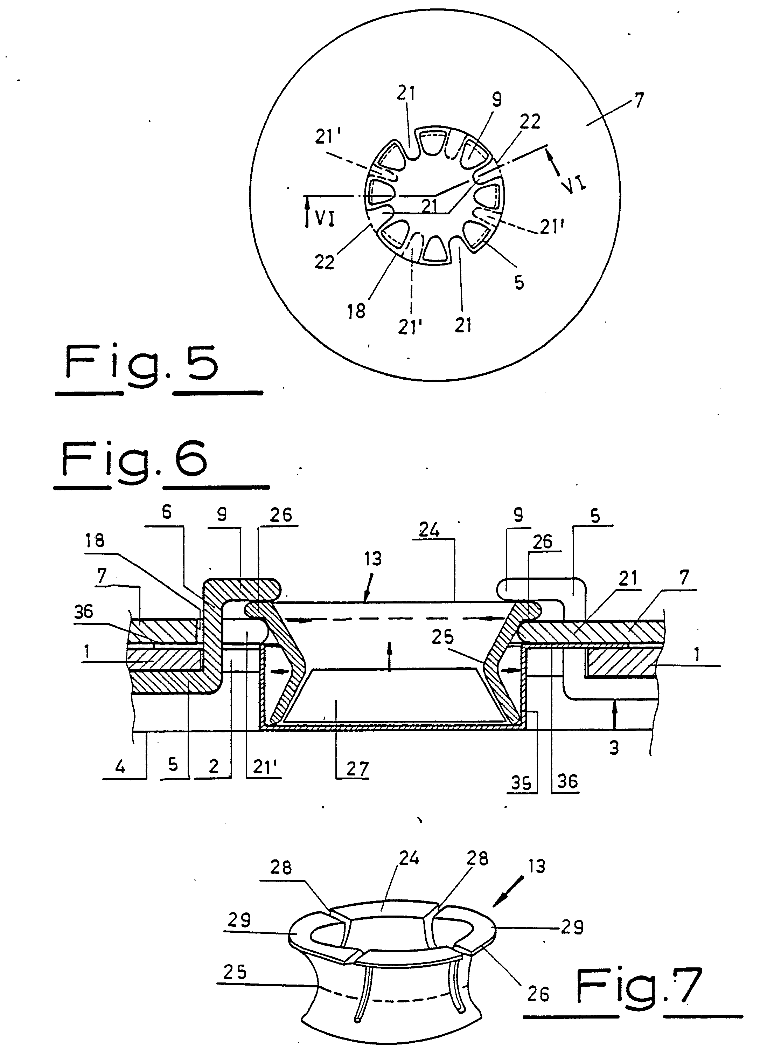

Um die Deckplatte 7 auf die Halterung 3, d. h. genauer gesagt auf die federnden Haltezungen 5 der Halterung 3, aufsetzen zu können, ist sie mit einer oder mehreren Öffnungen 8 versehen, die entsprechend den zur Plattenebene parallelen, radial einwärts gerichteten oberen Enden 9 der Haltezungen 5 angeordnet und geformt sind. Dabei können beispielsweise genau so viele Öffnungen 8 wie Haltezungen 5 vorgesehen werden, im vorliegende Beispiel also acht, es ist jedoch auch möglich, jeweils mehrere, z. B. zwei, derartige Öffnungen zu einer einzelnen Öffnung miteinander zu verbinden, wie in Fig. 1 bei 10 angedeutet ist. Von Bedeutung ist hier nur, daß zumindest ein Steg 11 verbleibt, der zwischen den vertikalen Teilen 6 der Haltezungen 5 hindurchragt und beispielsweise mit einem mittleren Bereich 12 der Deckplatte eine Verbindung herstellt. Aus Festigkeitsgründen wird dabei bevorzugt, möglichst zwischen allen Paaren von Haltezungen 5 einen Steg 11 zu belassen, so daß im vorliegenden Beispiel acht Stege 11 den mittleren Bereich 12 der Deckplatte 7 mit deren übrigen, außerhalb der Halterung 3 liegenden Bereich verbinden. Für die nachstehend noch näher zu beschreibende Sicherungsfunktion sind diese Stege 11 wesentlich, da zwischen ihnen und den oberen Enden 9 der Haltezungen 5 ein Sicherungsglied 13 wirkt, um die Deckplatte 7 an der Halterung 3 zu sichern und um damit wiederum eine Abnahme der CD-Platte 1 von der Halterung 3 zu verhindern. Der mittlere Bereich 12 der Deckplatte 7 ist hiefür nicht so wichtig, und er könnte daher auch weggelassen werden, wie dies bei der weiter unten noch näher erläuterten Ausführungsform gemäß Fig. 5 der Fall ist.

Das Sicherungsglied 13 besteht bei der Ausführungsform gemäß Fig. 1 und 2 aus einem Seegerring-artigen, aufgeschnittenen Federring 14, der zwischen den oberen Enden 9 der Haltezungen 5 und den Stegen 11 der Deckplatte 7 eingreift und so die Deckplatte 7 an den Haltezungen 5 verriegelt. Der Federring 14 ist in Fig. 4 in schematischer Draufsicht gezeigt, wobei ersichtlich ist, daß an den beiden den Schlitz begrenzenden, verbreiterten Enden Löcher 15 vorgesehen sind, in die ein entsprechendes, zangenartiges Werkzeug eingesetzt werden kann, um den Ring 14 entgegen seiner Federkraft aus der entspannten Lage (die in Fig. 4 gestrichelt gezeigt ist) in die zusammengezogene Lage zu bringen, in der der Ring 14 in die Öffnung zwischen den Haltezungen 5 eingesetzt bzw. aus der in Fig. 1 und 2 ersichtlichen Sicherungsstellung zwischen den Haltezungen 5 wieder herausgenommen werden kann. Ohne ein solches Werkzeug bzw. ohne geeignete Hilfsmittel kann der Federring 14 hingegen nur schwer aus der Sicherungsstellung gemäß Fig. 1 und 2 entfernt werden. Dadurch wird erreicht, daß die Deckplatte 7 in einem Verkaufslokal nicht ohne weiteres von der Halterung 3 abgenommen werden kann, so daß auch die CD-Platte 1 an der Halterung 3 gesichert ist, wobei aber doch die jeweilige Kassette problemlos, etwa um ein eingelegtes Informationsblatt lesen zu können, geöffnet werden kann. Sofern eine derart gesicherte Kassette mit CD-Platte oder aber eine aus einer Kassette herausgenommene Halterung 3 mit CD-Platte am Detektor vorbeigetragen wird (wobei sich ein derartiger Detektor üblicherweise beim Ausgang des Verkaufslokales befindet), spricht der Detektor an und gibt ein Alarmsignal ab.

Von Vorteil ist bei der beschriebenen Sicherungsanordnung somit einerseits, daß die Deckplatte 7 sowohl zur Anbringung des Sicherungs-Signalkreises als auch zur Sicherung der CD-Platte 1 an der Halterung 3 benutzt wird, und daß andererseits ein einfaches, problemlos sowohl mit den Stegen der Deckplatte als auch mit den Haltezungen in Eingriff bringbares bzw. aus diesem Eingriff lösbares Sicherungsglied vorgesehen ist, das doch eine unbefugte Abnahme wirksam verhindert.

In Fig. 3 ist eine gegenüber Fig. 2 etwas abgewandelte Ausführungsform der Sicherungsanordnung veranschaulicht, wobei bei dieser Ausführungsform, um für den Federring 14 mehr Platz vorzusehen, eine Abkröpfung des inneren Bereiches 12 der Deckplatte 7 vorgesehen ist. Zu diesem Zweck erstrecken sich die Stege 11 zwischen den Haltezungen 5 bzw. deren vertikalen Teilen 6 schräg abwärts nach innen, und der mittlere Bereich 12 ist somit gegenüber der Ebene der übrigen Deckplatte 7 nach unten versetzt. Auf diese Weise kann der Federring 14 eine größere Stärke als bei der Ausführungsform gemäß Fig. 2 aufweisen, wobei es auch denkbar ist, anstatt des in Fig. 3 gezeigten rechteckigen Querschnittes einen trapezförmigen Querschnitt vorzusehen, um so eine bessere Anpassung an die sich schräg abwärts erstreckenden Stege 11 der Deckplatte 7 erreichen. Im übrigen entspricht die Ausführungsform gemäß Fig. 3 jener gemäß Fig. 1 und 2, so daß sich eine weitere Erläuterung erübrigt.

In Fig. 5 ist eine Deckplatte 7 in Draufsicht gezeigt, die anders als in Fig. 1, wo sie rechteckig ist, in Form einer im wesentlichen kreisringförmigen Scheibe ausgebildet ist, wobei in die innere Öffnung 18 beispielsweise vier den Stegen 11 gemäß Fig. 1 und 2 entsprechende Vorsprünge 21 zwischen die Haltezungen 5 hineinragen und diese Vorsprünge 21 paarweise einander diametral gegenüberliegen. Wie weiters bei 21' angedeutet ist, können anstatt der vier Vorsprünge auch acht derartige Vorsprünge vorgesehen sein, und es ist umgekehrt auch möglich, nur zwei derartige Vorsprünge vorzusehen, vgl. die gestrichelte Linie bei 22 in Fig. 5. Der gemäß Fig. 1 vorgesehene mittlere Bereich 12 der Deckplatte 7 ist somit bei der Ausführungsform gemäß Fig. 5 weggefallen. Eine derartige Deckplatte 7 kann selbstverständlich ebenfalls mit Hilfe eines Federringes, wie des Federringes 14 gemäß Fig. 2, 3 bzw. 4, an der Halterung für die CD-Platte gesichert werden, es können hier jedoch auch andere Sicherungsglieder 13 eingesetzt werden, wie nachstehend anhand der Fig. 6 und 7 bzw. 8 erläutert wird.

Aus Fig. 6 ist wiederum, ähnlich wie aus Fig. 2, ersichtlich, wie eine CD-Platte 1 auf eine Halterung 3 klemmend aufgesetzt ist, wobei über dieser CD-Platte 1 eine Deckplatte 7, insbesondere jene gemäß Fig. 5, auf die Haltezungen 5 der Halterung 3 aufgesetzt ist. Die Deckplatte 7 weist dabei, ähnlich wie aus Fig. 5 ersichtlich ist, eine Anzahl von nach innen gerichteten Vorsprüngen oder Stegbereichen 21 auf, wobei vorzugsweise, wie dies bei 21' in Fig. 5 und auch in Fig. 6 angedeutet ist, gleich viele derartige Vorsprünge 21 wie Haltezungen 5 bei der Halterung 3 vorhanden sind. Insgesamt wird dadurch eine einzelne, sternartige Öffnung oder Durchbrechung 18 in der Deckplatte 7 erhalten, vgl. auch Fig. 5, in deren die Sternarme bildenden radialen Fortsätzen die Haltezungen 5 aufgenommen werden.

Das zur Sicherung bzw. Verriegelung der Deckplatte 7 an der Halterung 3 vorgesehene Sicherungsglied 13 besteht gemäß Fig. 6 und 7 aus einem ringartigen Rastglied 24, das in mittlerer Höhe eine Einschnürung 25 aufweist, und das am oberen Rand mit einem Randflansch 26 versehen ist, der zwischen die oberen Enden 9 der Haltezungen 5 und die Vorsprünge 21 der Deckplatte 7 eingreift und so letztere mit der Halterung 3 verriegelt. Das zufolge der Einschnürung 25 doppelkonusartig ausgebildete Rastglied 24 ist aus einem elastisch verformbaren Material, insbesondere Kunststoff, hergestellt, so daß seine in Fig. 6 veranschaulichte Sicherungs- oder Raststellung durch elastische Verformung seines oberen Teiles aufgehoben werden kann. Dazu wird das Rastglied 24 im Bereich seiner Einschnürung 25 auswärts verformt oder erweitert, wie in Fig. 6 mit Pfeilen angedeutet ist, wodurch der obere Teil des Rastgliedes 24 einwärts schwenkt, wobei die Einschnürung 25 den Schwenkpunkt für diese Schwenkbewegung bildet, und wodurch schließlich der Randflansch 26 aus der dargestellten Eingriffsstellung zwischen den Zungenenden 9 und den Vorsprüngen 21 bzw. 21' freikommt. Um diese Verformung des Rastgliedes 24 im Einschnürungsbereich auf einfache Weise herbeizuführen, ist im unteren Konusteil des Rastgliedes 24 eine kegelstumpfförmiger, magnetischer Eisenkörper 27 angeordnet, der im Fall der Entsicherung der dargestellten Anordnung mit Hilfe eines an die Oberseite der Halterung gehaltenen Magneten angehoben werden kann, wobei er als Keil wirkt und den Einschnürungsbereich des Rastgliedes 24 radial auswärts drängt. Wie weiters aus Fig. 7 ersichtlich ist, kann das Rastglied 24 in seinem oberen Teil geschlitzt sein, etwa kreuzartig angeordnete, sich axial erstreckende Schlitze 28 aufweisen, um so die elastische Verformung bzw. das Einwärtsschwenken des oberen Teiles des Rastgliedes 24 zu erleichtern.

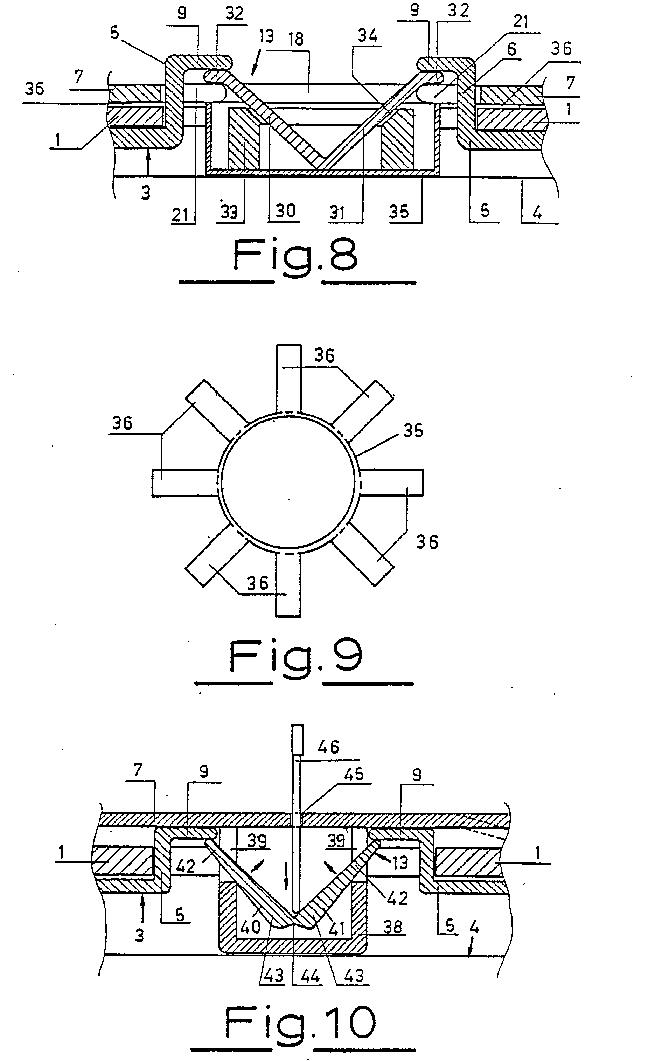

Selbstverständlich können auch weniger oder aber auch mehr derartige Schlitze vorgesehen werden, und es ist überdies auch möglich, einzelne durch die Schlitze begrenzte lappenartige Rastzungen, insbesondere einander gegenüberliegenden Rastzungen, wegzubrechen und nur zwei einander gegenüberliegende Rastzungen 29 zu belassen. In Fig. 6 ist ferner noch ein becherförmiger Behälter 35 mit flanschartigen Randvorsprüngen 36 ersichtlich, dessen Funktion nachstehend, in Zusammenhang auch mit den Fig. 8 und 9, noch näher erläutert werden wird.

In Fig. 8 ist eine gegenüber Fig. 6 etwas abgewandelte Ausführungsform der Sicherungsanordnung gezeigt, bei der das Sicherungsglied 13 ebenfalls durch ein elastisch verformbares Rastglied gebildet ist, welches hier jedoch zwei elastisch miteinander verbundene Rast- oder Spreizarme 30, 31 aufweist. Die Spreizarme 30, 31 weisen an ihren oberen Enden einen Randflansch 32 auf, und sie sind an ihren unteren Enden unter federnder Vorspannung in eine Spreizstellung gelenkig miteinander verbunden. Dabei ragen die Spreizarme 30, 31 in der in Fig. 8 gezeigten Sicherungs- oder Raststellung mit ihren Randflanschen 32 wiederum zwischen die oberen Enden 9 der Haltezungen 5 und die Vorsprünge 21 der Deckplatte 7, um so die Deckplatte 7 mit der Halterung 3 ähnlich wie bei der Ausführungsform gemäß Fig. 6 zu verriegeln. Um diese Verriegelung oder Sicherung aufzuheben, müssen die Rast- oder Spreizarme 30, 31 in Richtung aufeinander zu verschwenkt werden, was vorzugsweise wiederum mit Hilfe eines magnetischen Eisenkörpers 33 bewerkstelligt wird, der hier jedoch ringförmig ausgebildet ist und die beiden Spreizarme 30, 31 in der Sicherungsstellung in ihrem unteren Bereich außen umschließt. Der ringförmige Eisenkörper 33 kann dabei an der Oberseite innen entsprechend der Neigung der Spreizarme 30, 31 abgeschrägt sein, wie dies in Fig. 8 bei 34 veranschaulicht ist, um so eine verbesserte Keilwirkung zu erzielen.

Die Spreizarme 30, 31 können in Draufsicht bzw. in einem horizontalen Querschnitt gesehen kreisbogenförmig ausgebildet sein und dabei eine derartige Breite bzw. Bogenlänge haben, daß sie gemäß der Darstellung in Fig. 5 unter zumindest zwei benachbarte Haltezungen 5 (bzw. genauer gesagt deren obere Enden 9) eingreifen und dabei zumindest einen Vorsprung 21 der Deckplatte 7 überdecken.

In den schematischen Schnittdarstellungen gemäß Fig. 6 und Fig. 8 ist jeweils wiederum schematisch der Boden 4 der CD-Plattenkassette angedeutet. Weiters kann bei den gängigen CD-Kassetten wie bereits erwähnt üblicherweise die Halterung 3 aus der Kassette herausgenommen werden, was im vorliegenden Fall bedeuten würde, daß ohne weitere Maßnahmen die Vierriegelung der Deckplatte 7 und damit der CD-Platte 1 mit der Halterung 3 von der Unterseite der Halterung 3 her aufgehoben werden könnte. Um dies zu verhindern, ist bei den Anordnungen gemäß Fig. 6 und 8 jeweils der bereits in Zusammenhang mit Fig. 6 kurz erwähnte becherförmige Behälter 35 vorgesehen, in dem das jeweilige Sicherungsglied 13 enthalten ist, und der somit die Sicherungsanordnung von der Unterseite der Halterung 3 her abdeckt und sichert. Dieser Behälter 35 besteht beispielsweise aus Metall, und er weist an seinem oberen Rand mehrere flanschartige Randvorsprünge 36 auf, mit denen er in den Zwischenraum zwischen CD-Platte 1 und Deckplatte 7 eingreift, wobei sich diese Randvorsprünge 36 zwischen den Haltezungen 5 der Halterung 3 hindurch erstrecken. In Fig. 9 ist eine Draufsicht auf einen derartigen Behälter 35 gezeigt, wobei auch die sternartig angeordneten Randvorsprünge 36, beispielsweise acht solche Randvorsprünge, ersichtlich sind. Selbstverständlich wäre es hier auch möglich, weniger Randvorsprünge 36 vorzusehen, wie etwa vier kreuzförmig angeordnete Randvorsprünge. Wichtig ist hier nur, daß dieser Behälter 35 zwischen der CD-Platte 1 und der Deckplatte 7 verriegelt wird, so daß er auch von der Unterseite der Halterung 3 her, wenn diese aus der Kassette herausgenommen wurde, nicht abgenommen werden kann.

Wie ersichtlich kann auch bei den Ausführungsformen gemäß Fig. 6 und 8 somit das Sicherungsglied 13 jeweils nicht ohne weiteres, ohne geeignete Hilfsmittel (Magnet), entfernt werden, so daß auch hier eine verläßliche Sicherung der CD-Platte 1 erreicht wird, wobei dennoch diese Sicherung im gegebenen Fall vom Verkaufspersonal, etwa an der Kassa, rasch und problemlos aufgehoben bzw. entfernt werden kann.

Eine weitere, besonders bevorzugte Ausführungsform ist schematisch in Fig. 10 gezeigt. Dabei ist ersichtlich, daß die bei dieser Sicherungsanordnung vorgesehene Deckplatte 7 eine im wesentlichen kontinuierliche Deckfläche bildet, die über den oberen Enden 9 der Haltezungen 5 der Halterung 3 zu liegen kommt. Zum Aufsetzen der Deckplatte 7 auf die Halterung 3, d. h. zur Befestigung der Deckplatte 7 an der Halterung 3, ist an der Unterseite der Deckplatte 7 ein zylindrischer Vorsprung 38 vorgesehen, der einen becherartigen Behälter ähnlich dem Behälter 35 gemäß Fig. 6, 8 und 9 bildet, und der in seinem oberen, an die eigentliche Deckplatte 7 anschließenden Bereich an zwei einander gegenüberliegenden Stellen, benachbart zwei Zungenenden 9, durchbrochen ist bzw. Öffnungen 39 aufweist. Durch diese Öffnungen 39 ragt jeweils ein Spreizarm 40 bzw. 41 mit einem oberen Ende 42, wobei diese Spreizarme 40, 41 ein Sicherungsglied 13 in Form eines Rastgliedes ähnlich jenem gemäß Fig. 8 bilden. Die Spreizarme 40, 41 sind dabei mit ihren unteren Enden 43 wiederum gelenkig miteinander verbunden, wie in Fig. 10 bei 44 angedeutet ist, wobei diese Gelenkverbindung durch eine Art Filmscharnier od. dgl., allgemein gesagt durch einen elastisch verformbaren Materialbereich, der in einem Stück vorgesehenen Spreizarme gebildet sein kann. Die Gelenkverbindung 44 soll dabei derart sein, daß — ähnlich wie bei der Ausführungsform gemäß Fig. 8 — die Spreizarme 40, 41 wiederum in ihre Spreizstellung radial auseinander gedrückt bzw. federnd vorbelastet sind.

Die durch die Öffnungen 39 ragenden oberen Enden 42 der Spreizarme 40, 41 sind in der Sicherungsstellung gemäß Fig. 10 unter den oberen Zungenenden 9 der einander gegenüberliegenden beiden Haltezungen 5 eingerastet. Dieses Einrasten oder Einschnappen erfolgt dabei bei einem einfachen Aufsetzen der Deckplatte 7 mit dem Vorsprung 38 und den darin befindlichen Spreizarmen 40, 41, wie unmittelbar verständlich ist.

Um nun die Anordnung wieder entsichern zu können, d. h. um die Deckplatte 7 mit dem Behältervorsprung 38 und den Spreizarmen 40, 41 von der Halterung 3 wieder abnehmen zu können, könnte ähnlich wie bei der Ausführungsform gemäß Fig. 8 ein ringförmiger Keilkörper, insbesondere ein magnetischer Eisenkörper, innerhalb des Behälter-Vorsprunges 38 und die unteren Enden 43 der Spreizarme 40, 41 umgebend vorgesehen sein (nicht dargestellt). Gemäß Fig. 10 ist jedoch eine Betätigung mit einem Werkzeug in der Art eines Schlüssels vorgesehen, wozu in der Deckplatte 7 eine — beispielsweise entsprechend einem Schlüsselprofil geformte — Öffnung vorgesehen ist, durch die ein Plättchen oder ein Schlüssel mit einem entsprechenden Profil eingesteckt werden kann, vgl. das bei 46 in Fig. 10 veranschaulichte Werkzeug. Mit diesem Werkzeug 56 in Form eines Plättchens oder Schlüssels wird der Gelenkverbindungsbereich 44 der beiden Spreizarme 40, 41 nach unten gedrückt, wodurch die beiden Spreizarme mit ihren oberen Enden 42 aufeinander zu verschwenkt werden, wobei diese Schwenkbewegung durch die Auflage am unteren Rand der Öffnungen 39 einleitend unterstützt wird.

Wenn die Erfindung vorstehend anhand von besonders bevorzugten Ausführungsbeispielen näher erläutert wurde, so sind doch selbstverständlich im Rahmen der Erfindung weitere Abwandlungen und Modifikationen möglich. So ist es beispielsweise auch denkbar, als Sicherungsglied zur Verriegelung der Deckplatte mit der Halterung ein kleines, abnehmbares Schloß (ähnlich einem Schloß bei Sparbüchsen u. dgl.) zu verwenden, das auf einer Seite mit z. B. lappenartigen oder hakenförmigen Vorsprüngen unter die Enden von einigen Haltezungen geschoben wird und auf der gegenüberliegenden Seite mit einem mittels eines Schlüssels betätigbaren Riegel in Eingriff mit einigen Haltezungen bzw. der Deckplatte gebracht wird. Dieses Schloß kann ferner auch fest an der Deckplatte angebracht sein.

Die Erfindung löst somit in vorteilhafter Weise das Problem der elektronischen Sicherung von Aufzeichnungsplatten, wie insbesondere CD-Platten, ohne daß der Zugang zur Platte bzw. zum Inneren einer die Platte enthaltenden Kassette beeinträchtigt wird. Für diese Sicherung sind dabei ganz einfache Rast- oder Verriegelungselemente vorgesehen, deren Rast- bzw. Sicherungsstellung händisch nur schwer, mit einem geeigneten Hilfsmittel jedoch einfach und rasch aufgehoben werden kann.

**Patentansprüche**

1. Anordnung zur Sicherung einer Aufzeichnungsplatte (1), insbesondere CD-Platte, gegen eine unbefugte Entnahme, wobei die Aufzeichnungsplatte (1) in einer Kassette enthalten ist, die eine Halterung (3) für die Aufzeichnungsplatte (1) enthält, die mehrere abgewinkelte, federnde, durch eine mittige Öffnung (2) in der Aufzeichnungsplatte (1) ragende und dabei am Öffnungsrand unter Druck anliegende Haltezungen (5) aufweist, deren Enden (9) in eine zur Plattenebene parallele Ebene abgewinkelt und radial einwärts gerichtet sind, dadurch gekennzeichnet, daß über der Aufzeichnungsplatte (1) auf die Haltezungen (5) eine Deckplatte (7) aufgesetzt bzw. aufsetzbar ist, die einen mit einem Detektor zusammenarbeitenden Signalkreis, wie einen elektronischen Sicherungs-Schaltkreis, einen Magnetcode oder einen Magnetstreifen trägt oder, falls der Signalkreis an einem Etikett oder dergl. angebracht ist, zumindest teilweise abdeckt, und daß die Deckplatte (7) an der Halterung (3) durch ein mit zumindest einer der Haltezungen (5) in Eingriff stehendes bzw. bringbares, lösbares Sicherungsglied (13) verriegelt bzw. verriegelbar ist.

2. Anordnung nach Anspruch 1, dadurch gekennzeichnet, daß die Deckplatte (7) im Bereich der Haltezungen (5) durchbrochen ist und die Haltezungen (5) in der aufgesetzten Sicherungsstellung der Deckplatte (7) durch die Durchbrechung(en) (8 ; 18) ragen.

3. Anordnung nach Anspruch 1, dadurch gekennzeichnet, daß das Sicherungsglied (13) elastisch verformbar ausgebildet ist.

4. Anordnung nach Anspruch 1, dadurch gekennzeichnet, daß das Sicherungsglied (13) bewegbar angeordnet ist.

5. Anordnung nach einem der Ansprüche 2 bis 4, dadurch gekennzeichnet, daß jeder Haltezunge (5) eine gesonderte Öffnung (8) in der Deckplatte (7) zugeordnet ist.

6. Anordnung nach Anspruch 2, dadurch gekennzeichnet, daß die Deckplatte (7) eine einzige Durchbrechung (18) aufweist, die sternförmig, mit radialen Fortsätzen, ausgebildet ist, wobei die Haltezungen (5) durch diese radialen Fortsätze der Durchbrechung (18) ragen.

7. Anordnung nach einem der Ansprüche 1 bis 6, dadurch gekennzeichnet, daß die Deckplatte (7) zumindest einen sich zwischen zwei benachbarten Haltezungen (5) erstreckenden Steg (11) aufweist, und daß als Sicherungsglied (13) ein Seegerring-artiger Federring (14) vorgesehen ist, der in seiner expandierten Sicherungsstellung zwischen der Deckplatte (7) und den zur Plattenebene parallelen Enden (9) der Haltezungen (5) vorgesehen ist und in der entgegen seiner Federkraft zusammengezogenen Freigabestellung einen Durchmesser aufweist, der kleiner als der Abstand zwischen einander gegenüberliegenden Haltezungen (5) ist.

8. Anordnung nach Anspruch 7, dadurch gekennzeichnet, daß die Deckplatte (7) in ihrem innerhalb der Haltezungen (5) gelegenen Bereich (12) nach unten gekröpft ist, wobei der oder die Stege (11) zwischen den Haltezungen (5) einwärts nach unten geneigt verlaufen.

9. Anordnung nach Anspruch 2, dadurch gekennzeichnet, daß die Deckplatte (7) eine entsprechend der Anordnung der Haltezungen (5) geformte Durchbrechung (18) mit zumindest einem von deren Rand einwärts zwischen zwei der Haltezungen (5) vorstehenden Vorsprung (21, 21') aufweist, und daß das Sicherungsglied (13) durch ein innerhalb der Halterung (3) angeordnetes Rastglied (24) gebildet ist, das in der Sicherungsstellung oberhalb des Vorsprunges (21, 21') und unterhalb der zur Plattenebene parallelen Enden (9) der dem Vorsprung benachbarten Haltezungen (5) eingreift.

10. Anordnung nach Anspruch 9, dadurch gekennzeichnet, daß das elastisch verformbar ausgebildete Rastglied (24) eine mittige Einschnürung (25) aufweist und von dieser Einschnürung (25) sowohl nach oben, bis unter die Enden (9) der Haltezungen (5), als auch nach unten divergierend verläuft, wobei die Einschnürung (25) bei der elastischen Verformung des Rastgliedes (24) ein Gelenk bildet, um das der obere Teil des Rastgliedes bei dessen Ausweitung im Bereich der Einschnürung (25) radial einwärts schwenkbar ist.

11. Anordnung nach Anspruch 10, dadurch gekennzeichnet, daß innerhalb des unteren divergierenden Teiles des Rastgliedes (24) ein sich entsprechend dem divergierenden Verlauf dieses Rastglied-Teiles nach unten erweiternder, keilartiger Körper, vorzugsweise ein magnetischer Eisenkörper (27), angeordnet ist.

12. Anordnung nach Anspruch 9, dadurch gekennzeichnet, daß das Rastglied (24) zumindest zwei an ihren unteren Enden schwenkbar miteinander verbundene, mit ihren federnd auseinandergedrückten oberen Enden oberhalb von zumindest zwei einander gegenüberliegenden Vorsprüngen (21) und unterhalb der Enden (9) der diesen Vorsprüngen benachbarten Haltezungen (5) eingreifende Spreizarme (30, 31) aufweist.

13. Anordnung nach Anspruch 12, dadurch gekennzeichnet, daß die Schwenkverbindung der Spreizarme (30, 31) durch einen elastisch verformbaren Bereich des einstückig ausgebildeten Rastgliedes (24) gebildet ist.

14. Anordnung nach Anspruch 11 oder 12, dadurch gekennzeichnet, daß die unteren Abschnitte der Spreizarme (30, 31) von einem ringförmigen keilartigen Körper, insbesondere einem magnetischen Eisenkörper (33), umschlossen sind, bei dessen Anheben die Spreizarme (30, 31) aufeinander zu schwenkbar sind.

15. Anordnung nach einem der Ansprüche 9 bis 14, dadurch gekennzeichnet, daß das Rastglied (24) sowie gegebenenfalls der keilartige Körper (27 ; 33) innerhalb eines becherförmigen Behälters (35) angeordnet ist bzw. sind, der mit einer oberen Öffnung den Enden (9) der Haltezungen (5) zugewandt ist und mit einem oder mehreren flanschartigen Randvorsprüngen (36) zwischen der Aufzeichnungsplatte (1) und der Deckplatte (7) eingreift.

16. Anordnung nach Anspruch 1, dadurch gekennzeichnet, daß die Deckplatte (7) eine geschlossene Deckfläche bildet und an ihrer Unterseite mit einem zwischen die Haltezungen (5) abstehenden zylindrischen oder prismatischen, insbesondere becherförmigen Vorsprung (38) ausgebildet ist, in dessen Wand benachbart zumindest zwei einander gegenüberliegenden Enden (9) von Haltezungen (3) Öffnungen (39) vorgesehen sind, durch die in der Sicherungsstellung die oberen, federnd auseinandergedrückten Enden (42) von zwei an ihren unteren Enden (43) schwenkbar miteinander verbundenen, als Sicherungsglied (13) vorgesehenen Spreizarmen (40, 41) ragen, wobei diese oberen Enden (42) unter die Enden (9) der Haltezungen (3) greifen.

17. Anordnung nach Anspruch 16, dadurch gekennzeichnet, daß die Spreizarme (40, 41) mittels eines sie umschließenden ringförmigen, magnetischen Eisenkörpers bei dessen Anheben aufeinander zu schwenkbar sind.

18. Anordnung nach Anspruch 16, dadurch gekennzeichnet, daß in der Deckplatte (7) eine Schlüsselloch-artige Öffnung (45) vertikal oberhalb der Gelenkverbindung (44) der beiden Spreizarme (40, 41) vorgesehen ist, wobei die Spreizarme durch Abwärtsdrücken des Bereiches ihrer Gelenkverbindung aufeinander zu schwenkbar sind.

## Claims

1. Arrangement for securing a recording plate (1), especially a compact disc plate, against unauthorized removal, wherein the recording plate (1) is contained in a cassette which contains a support holder (3) for the recording plate (1), which holder comprises several cranked, resilient holding tongues (5), penetrating through a central opening (2) in the recording plate (1) and bearing against the edge of the opening under pressure, the ends (9) of which tongues are cranked into a plane parallel to the plane of the plate and radially inwards, characterized in that a cover plate (7) is or can be placed above the recording plate (1) onto the holding tongues (5), which cover plate carries a signal circuit cooperating with a detector, such as an electronic safety switching circuit, a magnetic code or a magnetic strip, or, if the signal circuit is provided on a label or the like, at least partly covers it, and that the cover plate (7) is or can be locked to the support holder (3) by a releasable securing member (13), which is or can be brought into engagement with at least one of the holding tongues (5).

2. Arrangement according to Claim 1, characterized in that the cover plate (7) is perforated in the region of the holding tongues (5) and the holding tongues (5), in the seated, securing position of the cover plate (7), penetrate through the aperture(s) (8 ; 18).

3. Arrangement according to Claim 1, characterized in that the securing member (13) is arranged to be elastically deformable.

4. Arrangement according to Claim 1, characterized in that the securing member (13) is arranged to be movable.

5. Arrangement according to one of Claims 2 to 4, characterized in that a separate opening (8) in the cover plate (7) is associated with each holding tongue (5).

6. Arrangement according to Claim 2, characterized in that the cover plate (7) comprises a single aperture (18), which is star-shaped with radial protrusions, the holding tongues (5) penetrating through these radial protrusions of the aperture (18).

7. Arrangement according to one of Claims 1 to 6, characterized in that the cover plate (7) comprises at least one web (11), extending between two adjacent holding tongues (5), and that a spring ring (14) like a Seeger ring is provided as securing member (13), which ring, in its expanded securing position, is provided between the cover plate (7) and the ends (9) of the holding tongues (5) parallel to the plane of the plate and, in the release position contracted against its spring force, has a diameter which is smaller than the distance between mutually opposite holding tongues (5).

8. Arrangement according to Claim 7, characterized in that the cover plate (7) is downwardly cranked in its region (12) situated inside the holding tongues (5), the web or webs (11) extending obliquely inwards and downwards between the holding tongues (5).

9. Arrangement according to Claim 2, characterized in that the cover plate (7) has an aperture (18) shaped to correspond to the arrangement of the holding tongues (5), with at least one projection (21, 21′) extending inwards from its edge between two of the holding tongues (5), and that the securing member (13) is formed by a detent member (24) disposed inside the support holder (3), which detent member, in the securing position, engages above the projection (21, 21′) and below the ends (9), parallel to the plane of the plate, of the holding tongues (5) adjacent to the projection.

10. Arrangement according to Claim 9, characterized in that the elastically deformable detent member (24) possesses a central constriction (25) and extends divergingly both upwards from this constriction (25) to beneath the ends (9) of the holding tongues (5) and also downwards, the constriction (25) forming a hinge in the elastic deformation of the detent member (24), about which hinge the upper part of the detent member can rotate radially inwards when it is expanded in the region of the constriction (25).

11. Arrangement according to Claim 10, characterized in that, inside the lower diverging part of the detent member (24), there is disposed a wedge-shaped body, preferably a magnetic iron block (27), diverging downwards corresponding to the diverging form of this part of the detent member.

12. Arrangement according to Claim 9, characterized in that the detent member (24) comprises at least two expanding arms (30, 31), pivotally connected to each other at their lower ends and engaging with their upper ends, biased apart by spring force, above at least two mutually opposite projections (21) and below the ends (9) of the holding tongues (5) adjacent to these projections.

13. Arrangement according to Claim 12, characterized in that the pivotal connection of the expanding arms (30, 31) is formed by an elastically deformable zone of the detent member (24), formed in one piece.

14. Arrangement according to Claim 11 or 12, characterized in that the lower portions of the expanding arms (30, 31) are surrounded by an annular wedge-shaped body, especially a magnetic iron body (33), which when lifted causes the expanding arms (30, 31) to pivot towards each other.

15. Arrangement according to one of Claims 9 to 14, characterized in that the detent member (24) and also, possibly, the wedge-shaped body (27 ; 33) is or are disposed inside a cup-shaped container (35), which faces with an upward opening towards the ends (9) of the holding tongues (5) and engages, with one or more flange-like edge projections (36) between the recording plate (1) and the cover plate (7).

16. Arrangement according to Claim 1, characterized in that the cover plate (7) forms a closed covering surface and is formed, at its lower side, with a cylindrical or prismatic, especially cup-shaped projection (38), projecting between the holding tongues (5), in the wall of which projection (38) adjacent to at least two mutually opposite ends (9) of holding tongues (3), openings (39) are provided, through which, in the securing position, the upper ends (42), biased apart by spring force, of two expanding arms (40, 41), pivotally connected together at their lower ends (43) and provided as the securing member (13), penetrate, these upper ends (42) engaging beneath the ends (9) of the holding tongues (3).

17. Arrangement according to Claim 16, characterized in that the expanding arms (40, 41) can be pivoted towards each other by means of an annular, magnetic iron body surrounding them, when this body is raised.

18. Arrangement according to Claim 16, characterized in that a keyhole-like opening (45) is provided in the cover plate (7) vetically above the hinge joint (44) of the two expanding arms (40, 41), the expanding arms being able to be pivoted towards each other by pressing downwards upon the region of the hinge joint.

**Revendications**

1. Dispositif de protection d'un disque d'enregistrement (1), en particulier d'un disque compact, contre un prélèvement non autorisé, le disque d'enregistrement (1) étant contenu dans une cassette qui comporte un support (3) destiné au disque d'enregistrement (1) qui présente plusieurs languettes de fixation (5) coudées, élastiques, traversant une ouverture (2) centrale du disque d'enregistrement (1) et s'appliquant ainsi sous pression contre le bord de l'ouverture, languettes de fixation dont les extrémités (9) sont coudées dans un plan parallèle au plan du disque et dirigées radialement vers l'intérieur, caractérisé en ce qu'une plaque de couverture (7) est placée ou peut être placée au-dessus du disque d'enregistrement (1) sur les languettes de fixation (5), laquelle porte un circuit de signalisation, tel qu'un circuit électronique de protection, ou un code magnétique ou une bande magnétique, coopérant avec un détecteur, ou dans le cas où le circuit de signalisation est appliqué sur une étiquette ou similaire, le recouvre au moins partiellement, et en ce que la plaque de couverture (7) est verrouillée ou peut être verrouillée sur le support (3), par un organe de protection (13) amovible en prise ou pouvant être amené en prise avec au moins l'une des languettes de fixation (5).

2. Dispositif selon la revendication 1, caractérisé en ce que la plaque de couverture (7) est ajourée dans la zone des languettes de fixation (5) et en ce que les languettes de fixation (5) traversent le ou les ajour(s) (8 ; 18) dans la position de protection de la plaque de couverture (7) mise en place.

3. Dispositif selon la revendication 1, caractérisé en ce que l'organe de protection (13) est déformable élastiquement.

4. Dispositif selon la revendication 1, caractérisé en ce que l'organe de protection (13) est disposé de manière à pouvoir se déplacer.

5. Dispositif selon l'une des revendications 2 à 4, caractérisé en ce qu'une ouverture (8) séparée, pratiquée dans la plaque de couverture (7), est associée à chaque languette de fixation (5).

6. Dispositif selon la revendication 2, caractérisé en ce que la plaque de couverture (7) présente un seul ajour (18) qui a la forme d'une étoile, avec des prolongements radiaux, les languettes de fixation (5) faisant saillie à travers ces prolongements radiaux de l'ajour (18).

7. Dispositif selon l'une des revendications 1 à 6, caractérisé en ce que la plaque de couverture (7) présente au moins une barrette (11) s'étendant entre deux languettes de fixation (5) voisines, et en ce qu'il est prévu comme organe de protection (13), un anneau élastique (14) du type Seeger qui, dans sa position de protection expansée, est prévu entre la plaque de couverture (7) et les extrémités (9) des languettes de fixation (5), parallèles au plan du disque, et qui présente, dans sa position de déverrouillage resserrée à l'encontre de sa force de ressort, un diamètre qui est inférieur à la distance séparant les languettes de fixation (5) opposées.

8. Dispositif selon la revendication 7, caractérisé en ce que la plaque de couverture (7) est coudée vers le bas dans sa zone (12) située à l'intérieur des languettes de fixation (5), la ou les barrette(s) (11) étant inclinée(s) vers le bas et vers l'intérieur, entre les languettes de fixation (5).

9. Dispositif selon la revendication 2, caractérisé en ce que la plaque de couverture (7) présente un ajour (18) de forme correspondant à la disposition des languettes de fixation (5) avec au moins une saillie (21, 21') débordant à l'intérieur du bord de cet ajour, entre deux des languettes de fixation (5), et en ce que l'organe de protection (13) est formé par un organe d'encliquetage (24) disposé à l'intérieur du support (3), lequel organe d'encliquetage agit, dans la position de protection, au-dessus de la saillie (20, 21') et au-dessous des extrémités (9), parallèles au plan du disque, des languettes de fixation (5) voisines de la saillie.

10. Dispositif selon la revendication 9, caractérisé en ce que l'organe d'encliquetage (24) déformable élastiquement présente un étranglement (25) central et diverge à partir de cet étranglement (25) vers le haut jusque sous les extrémités (9) des languettes de fixation (5), ainsi que vers le bas, l'étranglement (25) formant, pendant la déformation élastique de l'organe d'encliquetage (24), une articulation autour de laquelle la partie supérieure de l'organe d'encliquetage peut pivoter radialement vers l'intérieur dans la zone de l'étranglement (25), lorsque l'organe d'encliquetage s'élargit.

11. Dispositif selon la revendication 10, caractérisé en ce qu'un corps en forme de coin, s'élargissant vers le bas selon le parcours divergent de la partie inférieure divergente de l'organe d'encliquetage (24), de préférence un corps en fer (27) magnétique, est disposé à l'intérieur de cette partie de l'organe d'encliquetage.

12. Dispositif selon la revendication 9, caractérisé en ce que l'organe d'encliquetage (24) présente au moins deux bras d'écartement (30, 31) assemblés entre eux de manière pivotante à leurs extrémités inférieures, agissant par leurs extrémités supérieures écartées l'une de l'autre élastiquement, au-dessus d'au moins deux saillies (21) opposées et au-dessous des extrémités (9) des languettes de fixation (5) voisines de ces saillies.

13. Dispositif selon la revendication 12, caractérisé en ce que l'assemblage pivotant des bras d'écartement (30, 31) est formé par une zone élastiquement déformable de l'organe d'encliquetage (24) formé d'une seule pièce.

14. Dispositif selon la revendication 11 ou 12, caractérisé en ce que les sections inférieures des bras d'écartement (30, 31) sont entourées par un corps annulaire en forme de coin, en particulier par un corps en fer (33) magnétique, dont le relevage permet de faire pivoter les bras d'écartement (30, 31) l'un vers l'autre.

15. Dispositif selon l'une des revendications 9 à 14, caractérisé en ce que l'organe d'encliquetage (24), ainsi qu'éventuellement le corps (27, 33) en forme de coin, est ou sont disposé(s) à l'intérieur d'un conteneur (35) en forme de godet qui, par une ouverture supérieure, est tourné vers les extrémités (9) des languettes de fixation (5) et qui, par une ou plusieurs saillies de bordure (36) en forme de bride, pénètre entre le disque d'enregistrement (1) et la plaque de couverture (7).

16. Dispositif selon la revendication 1, caractérisé en ce que la plaque de couverture (7) forme une surface de couverture fermée et présente sur sa face inférieure une saillie (38) cylindrique ou prismatique, en particulier en forme de godet, passant entre les languettes de fixation (5), dans la paroi de laquelle sont prévues des ouvertures (39) à proximité au moins de deux extrémités (9) opposées de languettes de fixation (5), à travers lesquelles passent, en position de protection, les extrémités (42) supérieures, écartées élastiquement, de deux bras d'écartement (40, 41) assemblés entre eux de manière pivotante à leurs extrémités inférieures (43), prévus comme organe de protection (13), ces extrémités (42) supérieures passant sous les extrémités (9) des languettes de fixation (5).

17. Dispositif selon la revendication 16, caractérisé en ce que les bras d'écartement (40, 41) peuvent pivoter l'un vers l'autre par relevage d'un corps en fer magnétique, annulaire, les entourant.

18. Dispositif selon la revendication 16, caractérisé en ce qu'il est prévu dans la plaque de couverture (7), une ouverture (45) en forme de trou de serrure, verticalement au-dessus de l'assemblage articulé (44) des deux bras d'écartement (40, 41), les bras d'écartement pouvant être pivotés l'un vers l'autre par pressage vers le bas de la zone de leur assemblage articulé.

Fig.1

Fig.2

Fig.3

Fig.4

2

Fig. 5

Fig. 6

Fig. 7

Fig.8

Fig.9

Fig.10